# EUROPEAN PATENT APPLICATION

(11) **EP 2 131 302 A2**
(43) Date of publication of application: **09.12.2009**
(21) Application number: 09007415.4
(22) Date of filing: 04.06.2009
(51) Int. Cl.: G06F 21/20

(54) **Authentication system and method**

(30) Priority: 04.06.2008 JP 2008147449; 06.04.2009 JP 2009092367
(71) Applicant: Fujitsu Limited, Kawasaki-shi, Kanagawa 211-8588 (JP)
(72) Inventor: Semba, Satoshi, Kawasaki-shi Kanagawa 211-8588 (JP)
(74) Representative: HOFFMANN EITLE

(57) **Abstract**

An authentication system includes a user terminal to perform authentication based on a password corresponding to a seed number generated in accordance with a predefined rule. The system further includes a password issuance apparatus to issue the password in response to reception of a request message including the seed number.

## Description

### FIELD

The present invention relates to an authentication system and a method of authenticating. The present invention further relates to a user terminal, a password issuing device and a computer program.

### BACKGROUND

Many of user terminals such as personal computers and information systems including such user terminals are protected by means of passwords, for example. Checking a password is a cost effective way of authenticating a user who is authorized to use a user terminal or an information system. However, a user who is afraid of forgetting the password may write it on the body of the user terminal or on a piece of paper carried by the user. The written password may be sneaked a look at for unauthorized use. Especially, when a user carries a portable user terminal such as a notebook computer, the risk of unauthorized use of the password may increase.

Data stored in a portable user terminal can be partially or entirely encrypted. Even if the data is encrypted, the protection of the encrypted data may be difficult if the password for decrypting the data is used by an unauthorized person who sneaks a look at the password due to the user's conduct.

Many enterprises may educate their employees such that they do not write their password on the body of their user terminals in a training course for information security, for example. It may be difficult to educate the employees to fully follow such a requirement. The protection of confidential information may be a practically difficult problem for many enterprises.

One-time passwords may be a possible solution to solve such a problem. In this case, each user is provided with a handheld one-time password generator, for example, which generates to display one-time passwords. The one-time password generator may operate using the same algorithm as the log-in mechanism of the user terminal. Each time the user log-in the user terminal, the user is required to input a one-time password displayed on the one-time password generator. The one-time password generator generates different passwords each time he/she log-in the user terminal. The user would not write the different passwords on the body of the user terminal.

In this case, however, the user may leave the one-time password generator near the user terminal since the generator is necessary for logging-in the user terminal. For example, user may carry the one-time password generator together with the user terminal such as a notebook computer in the same luggage. If the luggage is left unattended or stolen, the one-time password generator may be used for logging-in the user terminal by an unauthorized person, which results in the same consequence as writing the fixed password on the body of the user terminal.

Some one-time password generator may require inputting a personal identification number (PIN) for generation and display of one-time passwords. However, if the user write his/her PIN on the body of such a one-time password generator, the same problem would occur as the user writing the password itself on the body of a user terminal.

In addition, the one-time password generator imposes additional cost and effort to manage it on the user.

Many people recently have a cellular phone, which may be alternatively used as a one-time password generator. For example, a method in which a cellular phone and an authentication server is proposed. In the method, the authentication server generates and stores a one-time password in response to a request for generating the one-time password from the cellular phone. The authentication server further sends the generated one-time password to the cellular phone. When the authentication server receives the one-time password from a workstation (operation server), the authentication server determines whether the received one-time password and the stored one-time password match, and send a message indicating successful authentication to the workstation.
[Patent Document 1] Japanese Laid-open Patent Publication No. 2007-58469

It is possible to download application software that enables a user's cellular phone to operate as the one-time password generator. The user can log in a user terminal using a one-time password generated and displayed by the downloaded application software. Problems of using a cellular phone as a one-time password generator are now discussed.

A user uses his/her cellular phone for making phone calls and sending/receiving e-mails as well as generating one-time passwords. Thus, the user often carries the cellular phone with him/her when the user leaves a notebook computer (user terminal). It is expected that using the cellular phone as the one-time password generator would help reduce the risk of both a user terminal such as the notebook computer and the cellular phone being lost or stolen together.

However, if such application software needs to be downloaded to cellular phones, it will incur great cost both for its development and distribution. It should be noted that, although cellular phones are very popular, there are multiple manufacturers of cellular phones and people have various types of cellular phones. The application software for enabling cellular phones to operate as a one-time password generator may need to be adapted to each type of cellular phones.

In addition, the application software may be downloaded from a software distribution server connected to the Internet to each cellular phone. The software distribution server, if it is made accessible from the Internet, may face more risk of unauthorized accesses than a server connected in an intranet protected by a firewall. Thus, the software distribution server usually requires constant effort for maintaining a high level of security, the effort including applying security patches, for example. The operation of the software distribution server connected to the Internet is often outsourced to an external service provider in order to distribute the application software safely, which incurs additional operation cost.

The method described above in which a cellular phone and an authentication server are used requires the authentication server to stored generated one-time passwords. The one-time password is sent at least twice, that is, from the authentication server to the cellular phone and from the operation server to the authentication server, which increases the risk of eavesdropping.

### SUMMARY

Accordingly, it is an object in one aspect of the invention to provide a new authentication system and method which solves at least one of the problems described above.

According to a first aspect of the invention, an authentication system includes a user terminal to perform authentication based on a password corresponding to a seed number generated in accordance with a predefined rule. The system further includes a password issuance apparatus to issue the password in response to reception of a request message including the seed number.

According to a second aspect of the invention, a user terminal includes a processing unit to generate a seed number in accordance with a predefined rule and generate a first password corresponding to the seed number. The user terminal further includes a display unit to display the seed number generated by the processing unit and an input unit to allow a second password to be inputted. The processing unit performs authentication by determining whether the first and second passwords match.

According to a third aspect of the invention, a password issuance apparatus includes a communication unit to receive a request message including a seed number generated by a user terminal in accordance with a predefined rule. The apparatus further includes a processing unit to issue a password for authentication by the user terminal based on at least the seed number.

According to a fourth aspect of the invention, a method for authentication includes generating a seed number in accordance with a predefined rule. The method further includes issuing a password in response to reception of a request message including the seed number, and performing authentication based on the issued password.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 illustrates an exemplary authentication system according to an embodiment;
FIG. 2 illustrates an exemplary log-in screen to be displayed on a user terminal according to an embodiment;
FIG. 3 illustrates an exemplary password generation server according to an embodiment;
FIG. 4 illustrates an exemplary configuration of a user information database;
FIG. 5 is a flowchart illustrating a method of registering user information according to an embodiment;
FIG. 6 is a block diagram illustrating an exemplary configuration of a user terminal according to an embodiment;
FIG. 7 is a flowchart illustrating a method of logging-in a user terminal according to an embodiment;
FIG. 8 illustrates an exemplary transformation table for transforming passwords into e-mail texts;
FIG. 9 is a flowchart illustrating a method of generating passwords according to an embodiment;
Fig. 10 illustrates an exemplary method of computing passwords;;
FIG. 11 illustrates an exemplary authentication system according to a second embodiment;
FIG. 12 illustrates an exemplary log-in screen to be displayed on a user terminal according to an embodiment;
FIG. 13 illustrates an exemplary configuration of a user information database;
FIG. 14 is a block diagram illustrating an exemplary configuration of a user terminal according to a second embodiment;
FIGs. 15A and 15B are a flowchart illustrating a method of logging-in according to a second embodiment;
FIG. 16 illustrates an exemplary configuration of a user encryption key database;
Fig. 17 is a sequence diagram illustrating user registration processing;
Fig. 18 is a sequence diagram illustrating log-in processing in stand-alone state; and
Fig. 19 is a sequence diagram illustrating log-in processing in server-connected state.

### EMBODIMENTS

Exemplary embodiments of the present invention will be described with reference to the drawings.

### [FIRST EMBODIMENT]

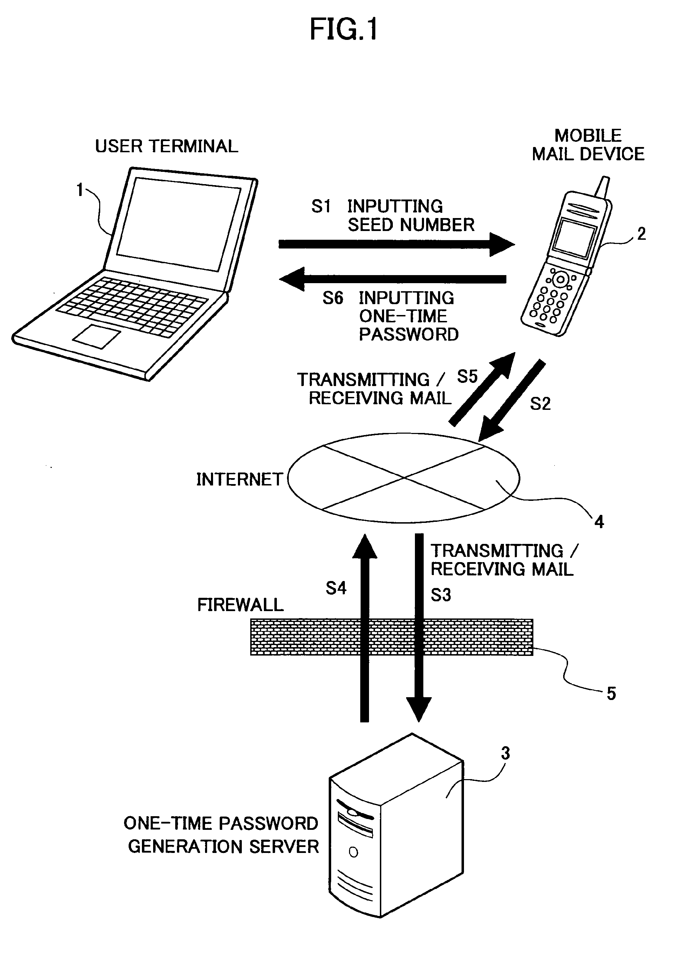

FIG. 1 illustrates an exemplary authentication system according to an embodiment. The authentication system illustrated in FIG. 1 includes a user terminal 1 such as a notebook computer, a mobile mailing device 2 such as a cellular phone, and a one-time password generation server 3. The mobile mailing device 2 and the one-time password generation server 3 can communicate via the Internet 4. In addition, the one-time password generation server 3 is protected by means of a firewall 5 from unauthorized access through the Internet 4.

Referring to FIG. 1, a description is given about procedure to log-in the user terminal 1 using a one-time password.

When a user turns on the user terminal 1, the user terminal 1 generates a seed number. The seed number is a 12-digit random number generated based on date and time-of-day, for example. Additionally, a one-time password is computed based on the seed number and a customer unique number. The computed one-time password will be used for comparison with a one-time password generated by the one-time password generation server 3 as will be described below in detail.

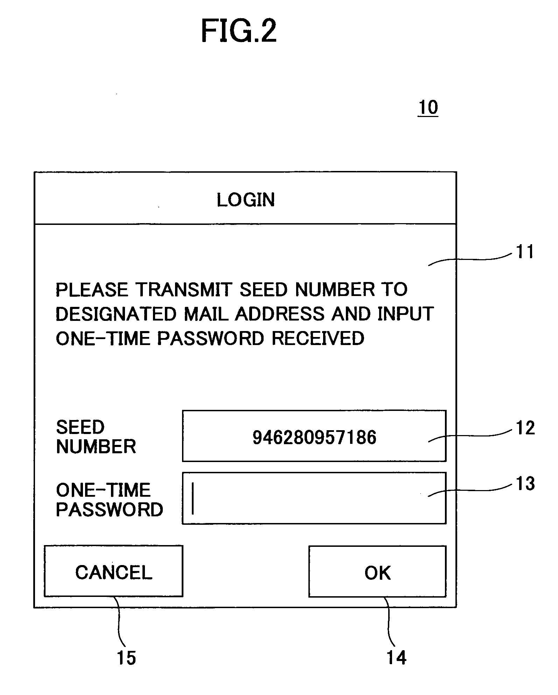

Then, after the computation of the seed number, a log-in screen 10 illustrated in FIG. 2 is displayed on a display unit of the user terminal 1. The log-in screen 10 indicates a message 11 that requests the user to input a one-time password, and a generated 12-digit seed number 12 ("946 280 957 186" in this case). The user terminal 1 waits for the user inputting the one-time password.

The user can manually input the seed number 12 indicated in the log-in screen 10 to the text of an e-mail to be transmitted by the mobile mailing device 2 (step S1 in FIG. 1).

The mobile mailing device 2 transmits the e-mail including the seed number as its text to a pre-registered one-time password reception mail address of the one-time password generation server 3 (step S2).

The transmitted e-mail is routed in the Internet to arrive at the firewall 5 which may be established by an enterprise who has introduced the authentication system. The firewall 5 blocks accesses from the Internet in dependence on its setting. However, the firewall 5 usually allows e-mails to pass through. Thus, the e-mail originated from the mobile mailing device 2 arrives at the one-time password generation server 3 arranged in the intranet of the enterprise without being blocked by the firewall 5.

The one-time password generation server 3 receives the e-mail and determines whether the received e-mail is addressed to a right one-time password reception mail address. The one-time password generation server 3 further determines whether it has received many (more than 100 e-mails, for example) e-mails addressed to the same reception address. The one-time password generation server 3 proceed to the next step if the one-time password generation server 3 does not find any problem such as the received e-mail being addressed to a wrong e-mail address and/or too many e-mails being received.

The one-time password generation server 3 computes (generates) a one-time password based on the seed number included in the received e-mail as its text and the customer unique number stored in the one-time password generation server 3.

The one-time password generation server 3 generates and transmits, to the mobile mailing device 2, an e-mail including the computed one-time password as the text of the e-mail. In the following description, the generation and transmission of the one-time password may be referred to as the issuance of the one-time password. The generated and transmitted e-mail passes through the firewall 5 and arrives at the mobile mailing device 2 via the Internet 4. (steps S4 and S5).

The user displays the received e-mail with the mobile mailing device and reads the one-time password included as the text of the e-mail. The user manually inputs the one-time password to a one-time password input box 13 (FIG. 2) in the log-in screen 10 displayed on the user terminal 1, and then presses OK button (step S6, FIG. 1).

The user terminal 1 compares the one-time password computed by the user terminal 1 itself based on the seed number and the one-time password inputted by the user, and if both one-time password match, executes log-in process.

If the user intends to cancel the log-in, the user presses a CANCEL button 15 (FIG. 2).

As described above, the user terminal 1 generates a seed number in accordance with a predetermined rule. The one-time password generation server 3 issues a one-time password in response to the reception of a request message including the seed number. The user terminal 1 performs the authentication of the user based on the issued one-time password. According to the arrangement, the security of the user terminal 1 is maintained at a high level, and the one-time password generation server 3 does not need to store the issued one-time password.

The authentication system according to the present embodiment uses the mobile mailing device 2 to transmit the seed number to the one-time password generation server 3 and to receive the one-time password from the one-time password generation server 3. In general, a firewall with which an enterprise protects its intranet from unauthorized access from the Internet usually passes e-mails without blocking. Thus, the authentication system can place the one-time password generation server within the intranet. The one-time password generation server does not require strict countermeasures, as required by an application software distribution server described above, against unauthorized access, and as a result the cost for operating the authentication system is reduced. This is the reason for using an e-mail in the present embodiment.

According to an embodiment, the seed number may be a series of numbers only. The log-in process is preferably simple and easy. A user can easily input a series of numbers only using a cellular phone.

According to an embodiment, the seed number may be 10 digits or more. It would be beneficial to assume that e-mails may be eavesdropped. The number of combinations needs to be great enough to ensure that eavesdropping does not work. If the seed number is 10 digits, one billion e-mails need to be compiled. Assuming that the authentication system has 1,000 users and that each user sends 10 request messages a day, compiling the full set of combinations takes more than 100 thousand days.

An unauthorized user who has come to possess a user terminal can try to log-in the user terminal repeatedly. According to another embodiment, the seed number may be 12 digits or more. In this case, even if the unauthorized user compiled all communication try to log-in the user terminal 1,000 times, it takes 10 thousand days or more. The cost for preparing devices to eavesdrop e-mails and the effort to log-in the user terminal would become too great, which increases the security of the authentication system.

According to an embodiment, if the user terminal 1 does not receive the one-time password for a predetermined time period after it displays the log-in screen (FIG. 2), the user terminal 1 generates a new seed number and display a new log-in screen to request the user to input a one-time password corresponding to the new seed number. The predetermined time period may be 10 minutes, for example. Ten minutes would be enough for the user to input the displayed seed number to the mobile mailing device 2, to receive an e-mail indicating a one-time password generated by the one-time password generation server 3, and to input the received one-time password to the log-in screen 10 (FIG. 2).

According to an embodiment, the one-time password generation server 3 may be configured to reject requests for the issuance of one-time passwords addressed to a particular one-time password reception address after the one-time password generation server 3 receives a notice that the user to whom the particular one-time password reception address is assigned has lost his/her mobile mailing device. It would be a reasonable assumption that the user often uses the cellular phone (mobile mailing device), and soon (within a couple of days, for example) notices if the user has lost it. According to such an arrangement, an unauthorized user would be discouraged to send requests for the issuance of one-time passwords, which results in a reduced traffic. The authorized user who has lost his/her mobile mailing device such as a cellular phone can request for a new one-time password reception address to resume the access to the authentication system.

According to another embodiment, the number of requests for the issuance of one-time passwords addressed to a one-time password reception address in a predetermined time period may be limited. In this case, the upper limit for requests per one day may be preferably one hundred.

According to an embodiment, even if the user has lost his/her mobile mailing device but has not sent the notice that the user has lost the mobile mailing device, the one-time password generation server 3 can automatically reject requests for the issuance of one-time passwords, if the number of the requests exceeds one hundred, for example. Thus, the access from unauthorized users can be blocked, while authorized users use the authentication system without any problem.

According to an embodiment, a customer unique number (4 digits, for example) may be stored both in the user terminal 1 and the one-time password generation server 3 when the authentication system according to the present embodiment is installed. Different customer unique numbers may be assigned to different customers (enterprises, for example). Thus, even if a customer unique number of one customer is eavesdropped, the operation of the authentication system of other customers is not affected.

According to the present embodiment, one-time passwords are generated using encryption algorithms such as AES. Some encryption algorithms such as AES operate well enough to generate one-time passwords from the seed number without any problem.

As described above, the authentication system according to the present embodiment can provide for cost effective and safe one-time password system.

An exemplary configuration of each component of the authentication system illustrated in FIG. 1 is described.

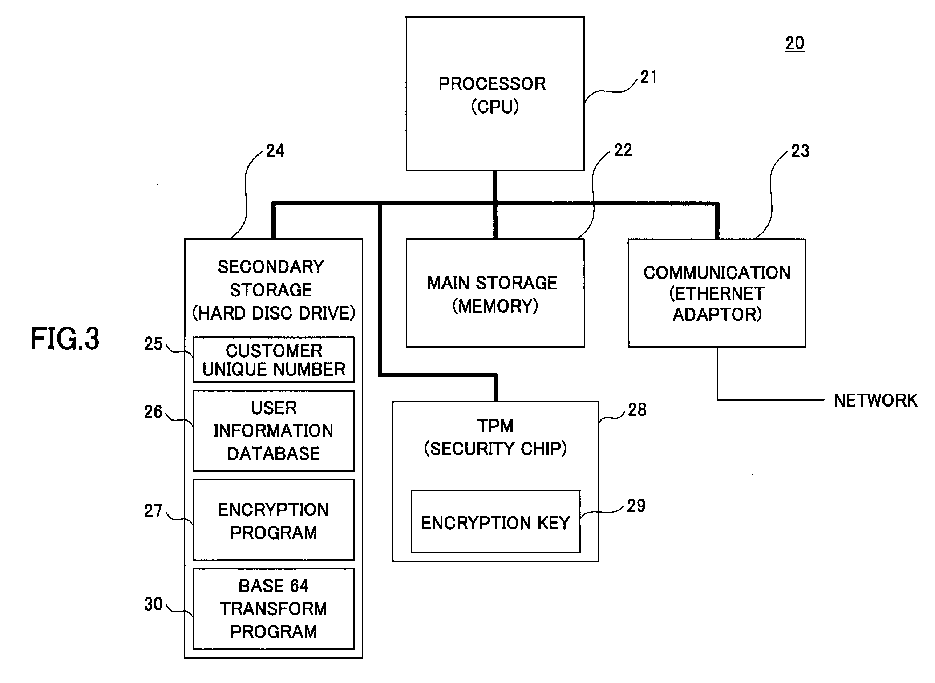

A description of the one-time password generation server 3 is given first. FIG. 3 illustrates an exemplary password generation server according to an embodiment.

A one-time password generation server 20 illustrated in FIG. 3 is a general purpose computer in hardware-wise, and it includes an processor (CPU, for example) 21 to perform arithmetic operations and the execution of computer programs, a main storage unit (memory, for example) 22 to temporarily store the result of operations, a communication unit (an Ethernet (trademark) adapter, for example) 23 to communicate with other entities via a network, and a secondary storage unit (a hard disc drive, for example) 24 to store various data and computer programs. The secondary storage unit 24 may store a customer unique number 25 (4-byte data, for example) that is assigned to the customer to which the authentication system is implemented, a user information database 26 storing various information of users (employees of the customer who access to the authentication system, for example), an encryption program 27, and base 64 transform program 30.

The one-time password generation server 20 further includes a trusted platform module (TPM) 28, which is a security chip and stores encryption keys 29 necessary for encryption. The TPM 28 is a non-volatile storage device which can not be analyzed by reverse-engineering. The TPM 28 can protect the encryption keys 29 from being stolen by reverse-engineering. The TPM 28 is a security chip which supports the trusted computing environment defined by TPM working group of the Trusted Computing Group (TCG).

The encryption program 27 generates encrypted data based on the encryption key 29 stored in the TPM 28 and data to be encrypted. An example of the encryption program 27 may include, but not limited to, AES and triple DES.

The BASE 64 transform program 30 transforms binary data into text data. The binary data generated by the encryption program 27 can not be included in the text of an e-mail. This is why the BASE 64 transform program 30 is necessary. According to another embodiment, any suitable transformation other than BASE 64 transform may be used.

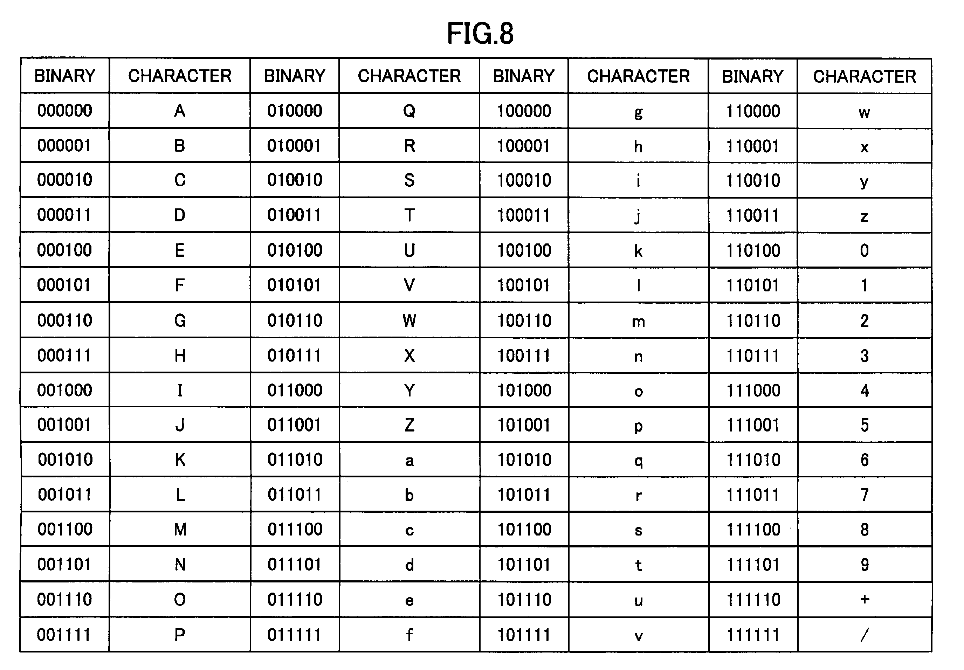

The transformation made by the BASE 64 transform program 30 is now described. The binary data to be transformed is segmented into 6-bit segments starting from the top of the binary data. If the last 6-bit segment is short by one or more bits, zero is added to make the segment complete. In the next step, every four 6-bit segments are transformed into ASCII data in accordance with a transformation table illustrated in FIG. 8. If the last group of 6-bit segments to be transformed is short by one or more 6-bit segments, a character "=" is added to make the group complete. The process described above can transform any binary data into ASCII data. For example, a 16-byte binary data can be transformed into 24-byte ASCII data.

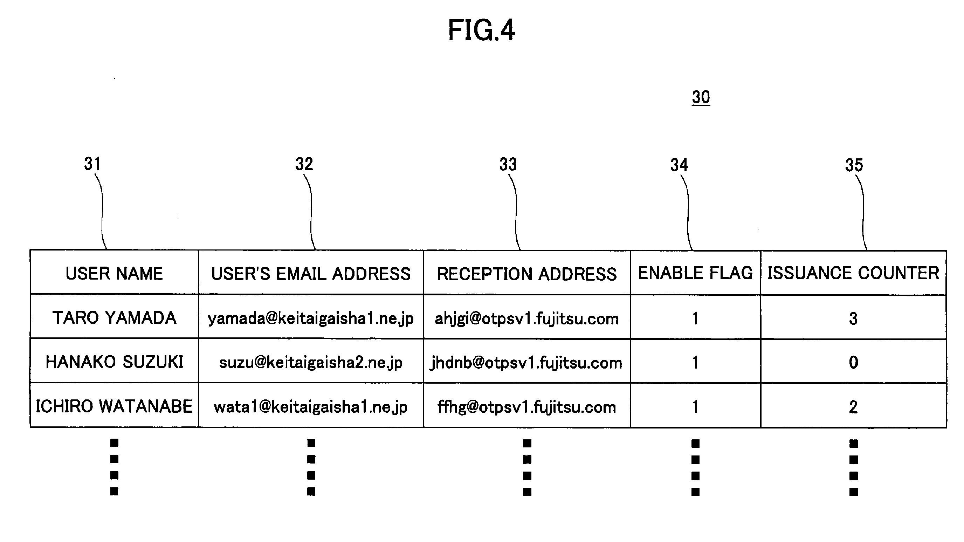

FIG. 4 illustrates an exemplary configuration of the user information database 26 (FIG. 3) stored in the secondary storage unit 24 of the one-time password generation server. The user information database 30 includes the following fields: user name 31; user e-mail address 32 indicating the e-mail address of the user's mobile mailing device; reception address 33 to which a request message for the issuance of one-time password is to be sent; enable flag 34 indicating whether the user's account is enabled; and issuance counter 35 which counts the number of one-time password issued.

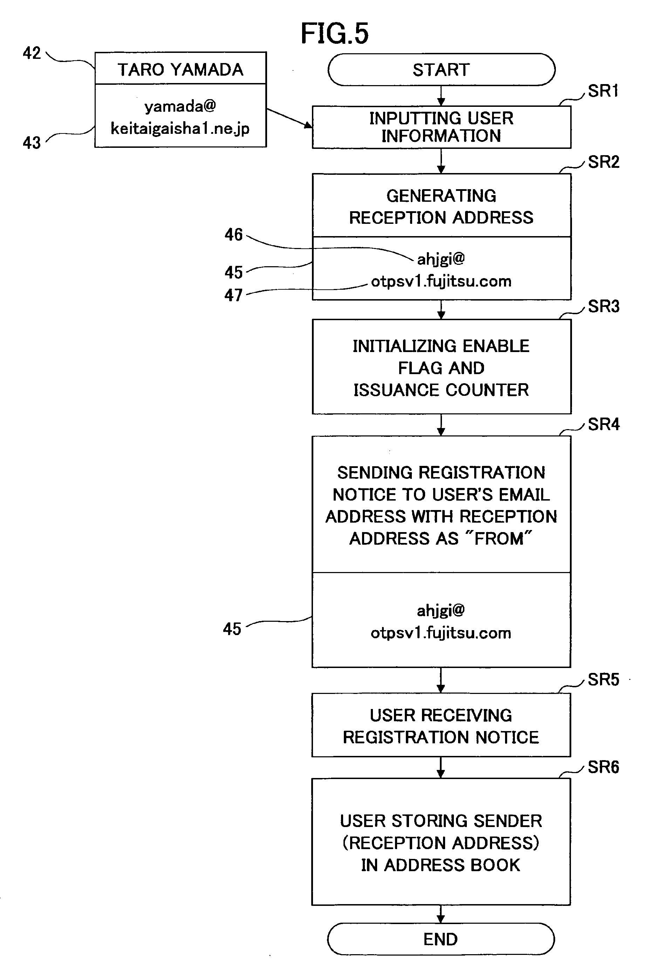

Additionally referring to FIG. 5, the process in which a user is registered in the user information database 30, which corresponds to the user information database 26 of FIG. 3.

The process starts at step SR1, in which user information is inputted to the one-time password generation server. The user's name 42 and the e-mail address 43 of his/her mobile mailing device are registered in this step. The inputted user name 42 and e-mail address 43 are stored in the user name field 31 and the e-mail address field 32 of the user information database 30 (FIG. 4).

In step SR2, the one-time password generation server automatically generates a one-time password request reception address 45 for the user. The one-time password generation server may generate a reception address with its second part 47 ("@optsv1.fujitsu.com" in this case) uniquely fixed for the server and its first part 46 ("ahjgi" in this case) randomly selected for each user. According to the present embodiment illustrated in FIG. 5, the first part 46 of the generated reception address is illustrated as including five characters ("ahjgi"). According to another embodiment, the second part 46 may include 10 or more characters, for example. The generated reception address 45 is stored in the user information database 30 (FIG. 4) as reception address 33.

In step SR3, the enable flag (FIG. 4; 34) and the issuance counter (FIG. 4; 35) are initialized. The default value of the enable flag is "enabled" (value 1 in this case). If a notice that the user has lost or been stolen his/her mobile mailing device is received, the enable flag is made "disabled" (value 0 in this case) to disable the entry for the user. While the enable flag is "disabled," the one-time password generation server issues no one-time password in response to the reception, at the disabled reception address, of an e-mail requesting for the issuance of a one-time password. The issuance counter 35 (FIG. 4) counts the number of issuance of one-time passwords in a day, for example. The issuance counter is incremented each time a one-time password is issued. When the counts of the issuance counter exceeds a predetermined value (100, for example), the enable flag is made "disabled" (value 0 in this case) such that no one-time password will be issued. If the counts of the issuance counter remains below the predetermined value, the issuance counter may be initialized to zero (0) every day.

If the user is to be identified and managed using a user identification information (user ID), the user ID may be also generated.

In step SR4, the one-time password generation server may send an e-mail indicating that the user has been registered for the use of the authentication system according to the present embodiment. The e-mail is sent to the e-mail address inputted in step SR1 (that is, to the user's mobile mailing device), using the reception address generated in step SR2 as the sender address of the e-mail.

If the user ID has been generated, the user ID is also included in the e-mail.

In step SR5, the e-mail indicating that the user has been registered for the use of the authentication system is transferred from the communication unit 23 (FIG. 3) to the user's mobile mailing device through the intranet of the customer, the firewall, and the Internet.

In step SR6, the user may store the reception address designated by the one-time password generation server, the reception address indicated as the sender of the e-mail. Many of cellular phones allow the user to store the reception address in the address book of the cellular phone easily only with a few steps of button operations regardless of the number of characters included in the reception address.

In addition, if the user receives a user ID designated to him/her, the user can record the user ID in the memorandum space in the address book.

The configuration of the one-time password generation server and the registration of a user to the one-time password generation server have been described. After the registration of the user, the one-time password generation server can issue one-time passwords for the user.

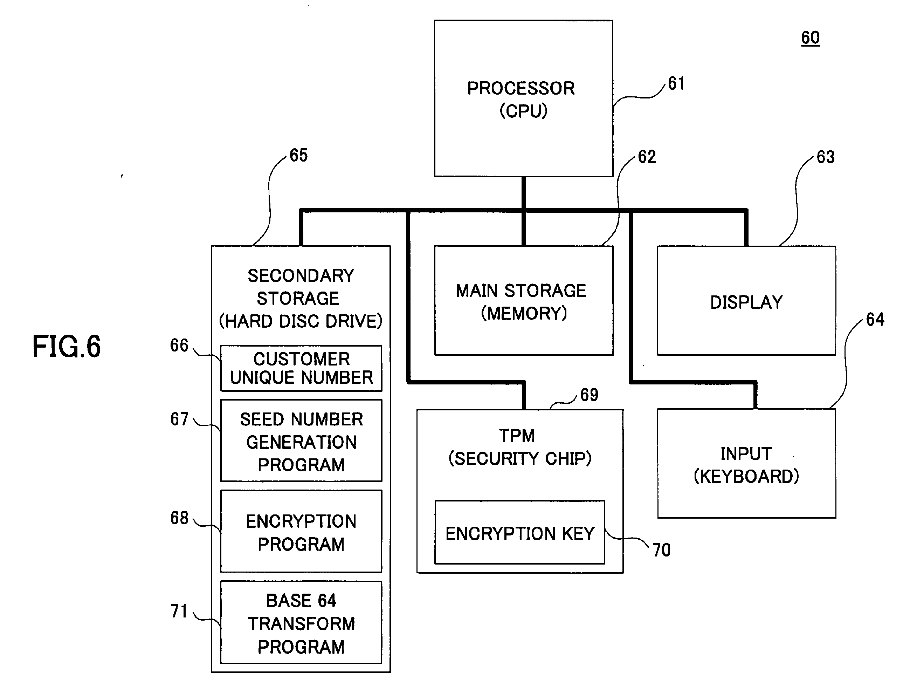

Referring now to FIG. 6, an exemplary configuration of the user terminal 1 (FIG. 1) according to an embodiment will be described. FIG. 6 is a block diagram illustrating an exemplary configuration of a user terminal according to an embodiment. The user terminal 60 illustrated in FIG. 6 is similar to an ordinary notebook computer in hardware-wise, and includes the following components: a processor 61 such as a central processing unit (CPU) to perform computation and the execution of a computer program; a main storage unit 62 such as a memory to store the result of the computation; a display unit 63 to display the result of the computation and messages; an input unit 64 such as a keyboard to allow a user to input characters and numbers; a second storage unit 65 such as a hard disc drive to store various data and computer programs; and a trusted platform module (TPM) 69.

The secondary storage unit 65 may store a customer unique number 66 (4-byte data, for example) that is assigned to the customer to which the authentication system is implemented, a seed number generation program 67 to generate seed number in accordance with a predetermined rule, an encryption program 68, and BASE 64 transform program 71.

The trusted platform module (TPM) 69 stores encryption keys 70 necessary for encryption.

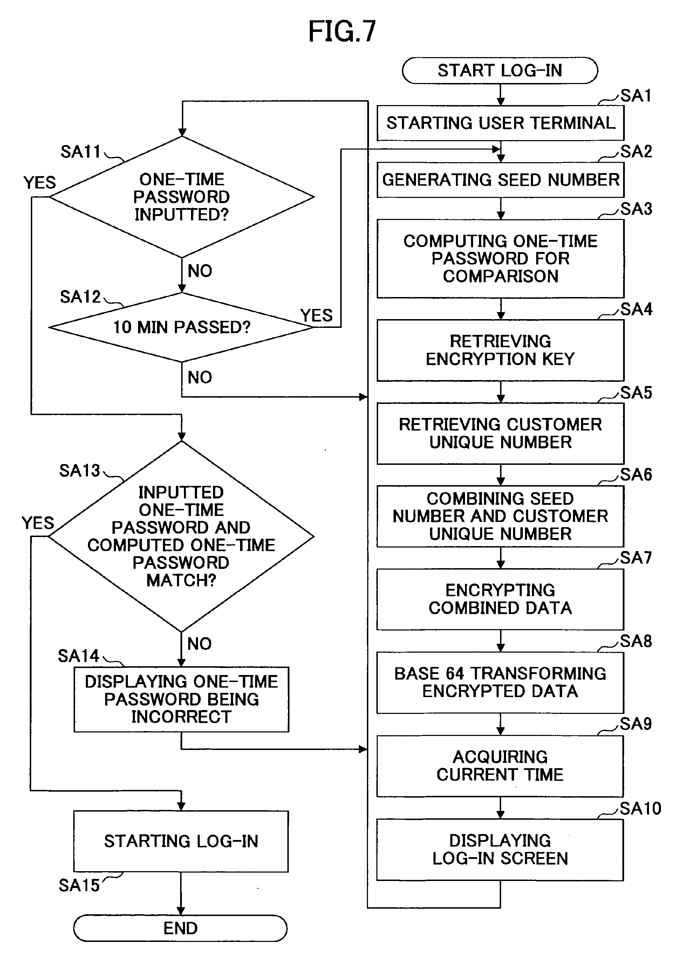

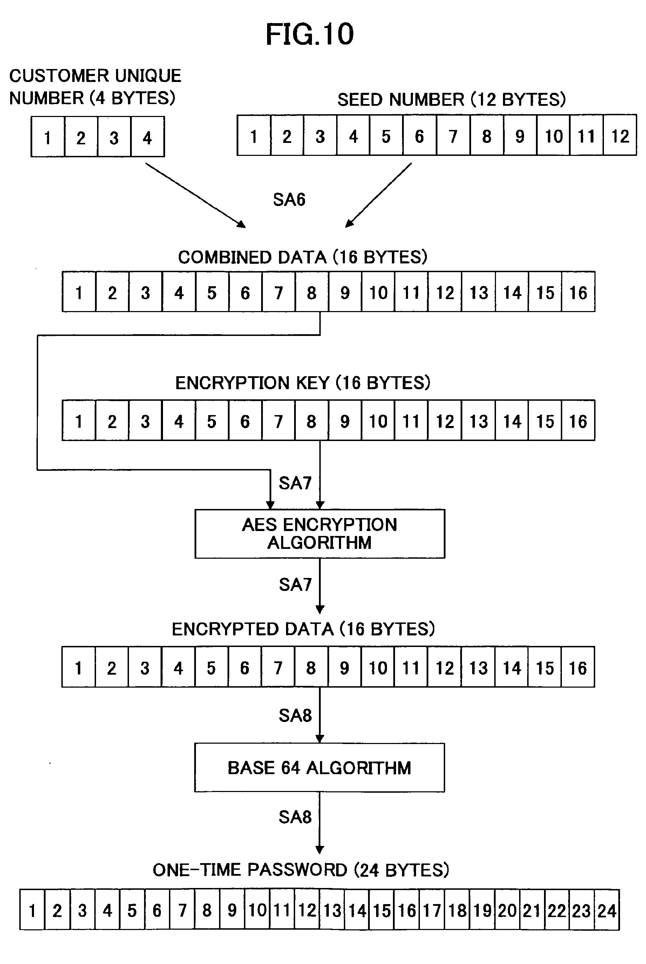

Referring to FIG. 7 in addition to FIG. 6, the log-in process to the user terminal 60 illustrated in FIG. 6. The computation of a one-time password will be described with reference to FIG. 10.

The log-in process starts at step SA1 in which the user powers on the user terminal. The processor 61 loads the seed number generation program 67 from the secondary storage unit 65 to the main storage unit 62 for execution.

In step SA2, a seed number is generated. The seed number is a 12-digit value, for example, which can be generated by means of a function for generating random number such as "rand" function of the C language. The "rand" function of the C language is a function to generate pseudo random number in a fixed order based on a seed value provided by means of "srand" function. Hence, the seed value needs to be carefully selected. According to the present embodiment, the seed value may be determined by means of arithmetically combining multiple values changing time to time such as time of day, the remaining capacity of the secondary storage unit, the serial number of the secondary storage unit, and the number of CPU clock cycles after the power-on of the user terminal. According to such an arrangement, a seed number which is substantially random can be generated. The seed number is stored in the main storage unit 62.

In step SA3, a one-time password for comparison is generated. The one-time password for comparison will be compared with the one-time password which will be inputted to the user terminal by the user. According to an embodiment, the 12-digit seed number and the 4-digit customer unique number are combined to be encrypted by AES encryption algorithm.

In step SA4, the encryption key 70 is retrieved from the TPM 69 to the main storage unit 62. In step SA5, the user unique number 66 is retrieved from the secondary storage unit 65 to the main storage unit 62. In step SA6, the 12-digit seed number (12 bytes) and the 4-digit customer unique number (4 byte) are combined. The combined data (16 bytes) is stored in the main storage unit 62.

In step SA7, the combined data is encrypted with the encryption key 70 using the AES encryption algorithm. The encrypted data (16 bytes) is stored in the main storage unit 62. In step SA8, the encrypted data is transformed using the BASE 64 transform program 71. The transformed data is ASCII data, which is the one-time password (24 bytes). The resulting one-time password is stored in the main storage unit. In step SA9, the time of day is acquired and stored in the main storage unit. The time of day is used for computing lapse time from the time at which the log-in screen is displayed. In step SA 10, the log-in screen illustrated in FIG. 2 is displayed on the display unit 63. The log-in screen includes the seed number generated in step SA2. After the user terminal displays the log-in screen, it waits for the one-time password to be inputted through the input unit 64.

The steps SA1 - SA10 described above correspond to those illustrated in FIG. 1 from the step in which the user terminal is powered on to the step in which the user terminal waits for the one-time password to be inputted. As described with reference to FIG. 1, the user sends an e-mail from his/her mobile mailing device 2 to the one-time password generation server 3 to obtain a one-time password.

Returning to FIG. 7, in step SA11, the user terminal 60 (FIG. 6) determines whether a one-time password is inputted to the log-in screen. If a one-time password has been inputted, the process proceeds to step SA 13. Otherwise, the process proceeds to step SA12.

In step SA12, the user terminal determines whether 10 minutes, for example, has passed since the time of day acquired in step SA9. If a determination is made that 10 minutes has not passed, the process returns to step SA11. If a determination is made that 10 minutes has already passed, the user terminal deletes the log-in screen and returns to step SA2. This is because the lapse time since the log-in screen is displayed is too long.

In step SA13, the user terminal compares the one-time password inputted through the log-in screen and the one-time password for comparison that has been stored in the main storage unit. If the comparison results in a match, the process proceeds to step SA15, otherwise to step SA14. In step SA14, the user terminal displays a message to indicate that the log-in password inputted to the log-in screen is wrong. Then, the process returns to step SA11. The process starts at step SA15 the log-in operation. The log-in process at the user terminal has been described.

The transmission of the seed number by the mobile mailing device (FIG. 1; 2) is now described in detail. The user generates a new e-mail addressed to the reception address registered for the user (FIG. 5; step SR6). The reception address may be a series of randomly selected characters. Most of mobile mailing devices can store the reception address. The user can create the new e-mail easily with a couple of button operations. The user input the 12-digit seed number which is displayed in the log-in screen of the user terminal to the text of the new e-mail. The seed number may include only numerals such that the user can easily input the seed number to his/her cellular phone (mobile mailing device). The e-mail including the seed number as its text is transmitted. Since the text of the e-mail is short, the e-mail will be delivered to the one-time password generation server quickly. Thus, a response (e-mail) indicating a one-time password, which may be also short, will be returned from the one-time password generation server quickly. Total time which will be needed for the transmission of the e-mail and the reception of a response to the e-mail may be less than 10 seconds under usual domestic traffic condition of the Internet. The received e-mail is displayed. The text of the displayed e-mail may include the one-time password including 24 alphanumeric. The user can input the one-time password displayed on the mobile mailing device to the input unit of the user terminal. The input unit may be a keyboard, which allows the user to input alphanumeric easily.

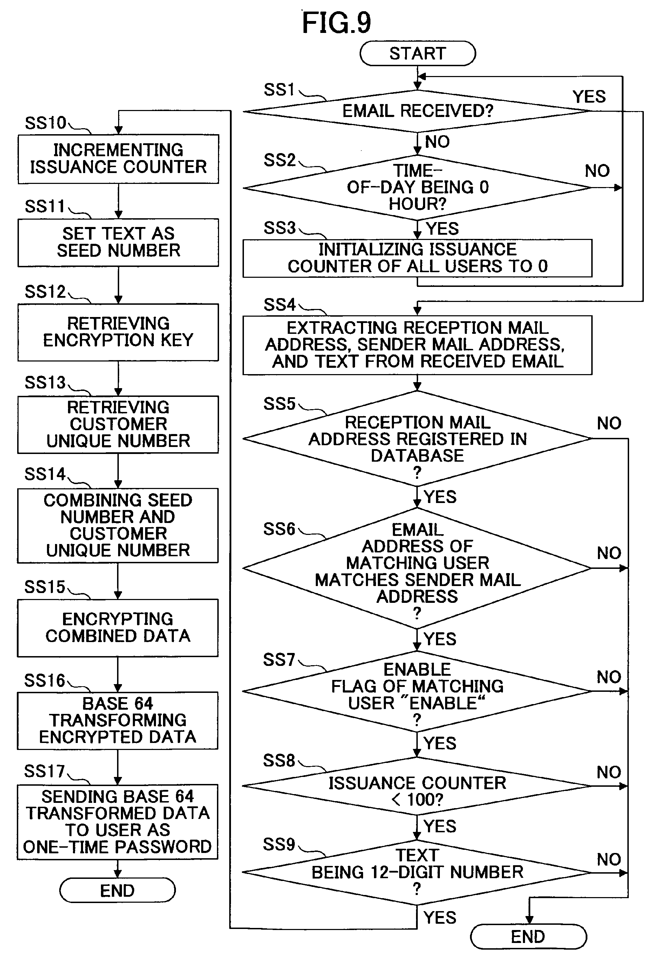

The issuance of a one-time password by the one-time password generation server is now described in detail. FIG. 9 is a flowchart illustrating a method of generating passwords according to an embodiment.

The method starts at step SS1 in which the one-time password generation server determines whether it received an e-mail requesting for the issuance of a one-time password. If the e-mail has been received, the method proceeds to step SS4, otherwise to step SS2. In step SS2, a determination is made whether the time of day is zero o'clock. If it is zero o'clock, the method proceeds to step SS3. Otherwise, the method returns to step SS1.

In step SS3, the one-time password generation server initializes the issuance counters of all users to zero. The issuance counters are provided in the user information database (FIG. 3; 26) in the secondary storage unit (FIG. 3; 24) of the one-time password generation server. The method then returns to step SS1. Steps SS2 and SS3 reset the issuance counters every day. However, the time interval at which the issuance counter is reset can be selected in dependence on particular implementations. In step SS4, a destination e-mail address, sender e-mail address, and a text (body) are extracted from the received e-mail.

The one-time password generation server may determine whether the destination address of the received e-mail matches any one of the reception addresses in the user information database in step SS5. If no match found, the method ends. If a matching reception address is found in the user information, the method proceeds to step SS6 to compare the sender e-mail address with the corresponding e-mail address of the matching user. If the sender e-mail address does not match the corresponding e-mail address of the matching user, the method ends. If the sender e-mail address matches the corresponding e-mail address of the matching user, the method proceeds to step SS7, in which the enable flag of the matching user is examined. If the enable flag is zero (0), which indicates that the user account is disabled, the method ends.

In step SS7, if the enable flag is one (1), which indicates that the user account is enabled, the method proceeds to step SS8, in which the issuance counter of the matching user is examined. If the count of the issuance counter is 100 or more, the method ends. If the count of the issuance counter is less than 100, the method proceeds to step SS9, in which a determination is made whether the text of the e-mail is a 12-digit number. If the text of the e-mail is not a 12-digit number, the method ends. If the text of the e-mail is a 12-digit number, the method proceeds to step SS10, in which the issuance counter is incremented.

In step SS11, the seed number indicated as the text of the e-mail is read. In step SS12, the encryption key 29 is retrieved from the TPM 28 to the main storage unit 22. In step SS13, the user unique number 25 is retrieved from the secondary storage unit 24 to the main storage unit 22.

In step SS14, the seed number (12 bytes) and the customer unique number (4 byte) are combined. The combined data (16 bytes) is stored in the main storage unit 22. In step SS15, the combined data is encrypted with the encryption key 29 using the AES encryption algorithm, for example. The encrypted data (16 bytes) is stored in the main storage unit 22. In step SS16, the encrypted data is transformed using the BASE 64 transform program. The resulting ASCII data is the one-time password. The resulting one-time password is stored in the main storage unit.

In step SS17, an e-mail including the one-time password as its text is sent to the e-mail address of the mobile mailing device of the user. The issuance of a one-time password is described above. The registration of a user, the display of the seed number, the request for a one-time password, the issuance of the one-time password, and the log-in operation are performed as described above.

According to some embodiments, only a one-time password is used for the log-in to the user terminal. According to some embodiments, another authentication system may be utilized in parallel with the authentication system by one-time password. In particular, biometrics may be effectively utilized in parallel with the one-time password. A biometrics system can provide a high level of security at relatively low cost. The biometrics system, however, may fail to authenticate about 1% of users. The authentication system using one-time passwords may be used for such users whom the biometrics system fails to authenticate.

### [SECOND EMBODIMENT]

An authentication system according to another embodiment is now described below. The authentication system solves the problem that a personal computer (notebook computer) and a one-time password generation server are not directly connected and they are unable to exchange secret data.

At first, the user connects a user terminal (the notebook computer) to a network to which the one-time password generation server is connected. The network is preferably a secured one. More preferably, the network is an intranet.

When the user logs in the user terminal, it displays a login screen including a seed number to request the user to input a one-time password corresponding to the seed number and a user ID of the user.

The user inputs the user ID assigned to the user to the log-in screen. Then, the user uses his/her mobile mailing device such as a cellular phone to send an e-mail to a reception address that has been registered in the mobile mailing device, the e-mail including the seed number as the text (body) of the e-mail.

When the one-time password generation server receives the e-mail, the one-time password generation server identifies the user based on the sender address of the e-mail, and retrieves one-time password generation key which is unique for the user from a storage unit. Then, the one-time password generation server encrypts the seed number using the one-time password generation key to generate a one-time password. The one-time password generation server returns an e-mail to the mobile mailing device, the e-mail including the generated one-time password as the text (body) of the e-mail.

When the mobile mailing device receives the returned e-mail, the mobile mailing device stores the e-mail therein to display it to the user.

The user can read the text of the returned e-mail and inputs the one-time password to the user terminal.

When the user terminal receives the input of both the user ID of the user and the one-time password, the user terminal establishes a connection with the one-time password generation server via the network to transmit the user ID of the user, the one-time password, and the seed number displayed through the log-in screen. The use of an intra-net as the network may reduce the risk of eavesdropping, for example. The communication between the user terminal and the one-time password generation server may be encrypted for higher security level. The encrypted communication may use Secure Socket Layer (SSL), for example.

When the one-time password generation server receives the user ID of the user, the one-time password, and the seed number, the one-time password generation server identifies the user based on the user ID and retrieves the one-time password generation key which is unique for the user from the storage unit. Then, the one-time password generation server encrypts the seed number using the one-time password generation key to generate a one-time password for authentication.

Then, the one-time password generation server compares the one-time password received from the user terminal with the generated one-time password for authentication. If the one-time password generation server finds the two one-time passwords match, the one-time password generation server transmits the result of successful authentication and the one-time password generation key for the user to the user terminal. Otherwise, that is, if the authentication fails, the one-time password generation server transmits only the result of unsuccessful authentication to the user terminal.

If the authentication is successful, the user terminal stores the inputted user ID and the received one-time password generation key for the user, the user ID and one-time password generation key associated to each other. Then, the user terminal allows the user to log-in. If the authentication is unsuccessful, the user terminal does not allow the user to log-in.

According to the above arrangement, the user terminal establishes a connection with the one-time password generation server via the network and, if the authentication is successful, the user terminal stores the user ID and the one-time password generation key associated with each other in an internal storage unit of the user terminal. Then, the user terminal can authenticate the user even if the user terminal is not connected to the same network to which the one-time password generation server is connected.

Once the authentication system authenticates the user while the user terminal is connected to the network and the user ID and the one-time password generation key associated with each other are stored in the user terminal, the authentication system can authenticate the user as described with reference to FIG. 1.

When the user logs in the user terminal, it displays a login screen including a seed number to request the user to input a one-time password corresponding to the seed number and a user ID of the user.

The user inputs the user ID assigned to the user to the log-in screen. Then, the user uses his/her mobile mailing device such as a cellular phone to send an e-mail to a reception address that has been registered in the mobile mailing device, the e-mail including the seed number as the text (body) of the e-mail.

When the one-time password generation server receives the e-mail, the one-time password generation server identifies the user based on the sender address of the e-mail, and retrieves one-time password generation key which is unique for the user from the storage unit. Then, the one-time password generation server encrypts the seed number using the one-time password generation key to generate a one-time password. The one-time password generation server returns an e-mail to the mobile mailing device, the e-mail including the generated one-time password as its text.

When the mobile mailing device receives the returned e-mail, the mobile mailing device stores the e-mail therein to display it to the user.

The user can read the text of the returned e-mail and inputs the one-time password to the user terminal.

When the user terminal receives the input both of user ID and of one-time password, the user terminal identifies the user based on the user ID and retrieves the one-time password generation key for the identified user.

If the user terminal finds no one-time password generation key corresponding to the user ID stored therein, the user terminal prompts the user to connect the user terminal to the network. The network is preferably a secured one.

If the user terminal finds a one-time password generation key corresponding to the user ID stored therein, the user terminal uses the one-time password generation key to encrypt the seed number and generate a one-time password for authentication. The user terminal compares the generated one-time password and the inputted one-time password. If the user terminal finds the two one-time passwords match, it allows the user to log-in. Otherwise, which means an unsuccessful authentication, the user terminal does not allow the user to log-in.

The authentication system according to the present embodiment uses the mobile mailing device to transmit the seed number to the one-time password generation server and to receive the one-time password from the one-time password generation server.

The use of e-mails allows the one-time password generation server to be set up in a region protected by a firewall. Hence, the one-time password generation server does not need to be strictly managed as an application server directly accessible from the Internet. As a result, the cost of operating the one-time password generation server may be reduced.

According to the present embodiment, a one-time password generation key used for authentication of a user is a unique key dedicated for the user. Even if the one-time password generation key for a user is stolen, the other users would not have a trouble.

The one-time password generation key may be transmitted from the one-time password generation server to the user terminal via a secured network such as an intra-net which may be protected from eavesdropping, for example. The one-time password may be encrypted for transmission, if necessary. According to the present embodiment, the one-time password can be transmitted safely from the one-time password server to the user terminal without being blocked by the firewall.

The authentication process according to the present embodiment is performed as described with reference to the first embodiment, but the authentication (the comparison of the inputted and generated one-time passwords) is performed by the one-time password generation server. Thus, the one-time password generation key can be transmitted to the user terminal which is used by an authentic user, whose e-mail address is registered in the user information database.

Once the user terminal receives the one-time password generation key via the network, the user terminal can generate one-time passwords for authentication. Thus, even if the user terminal is disconnected from the network, the user terminal can perform the authentication of its user by itself to allow the user to log-in.

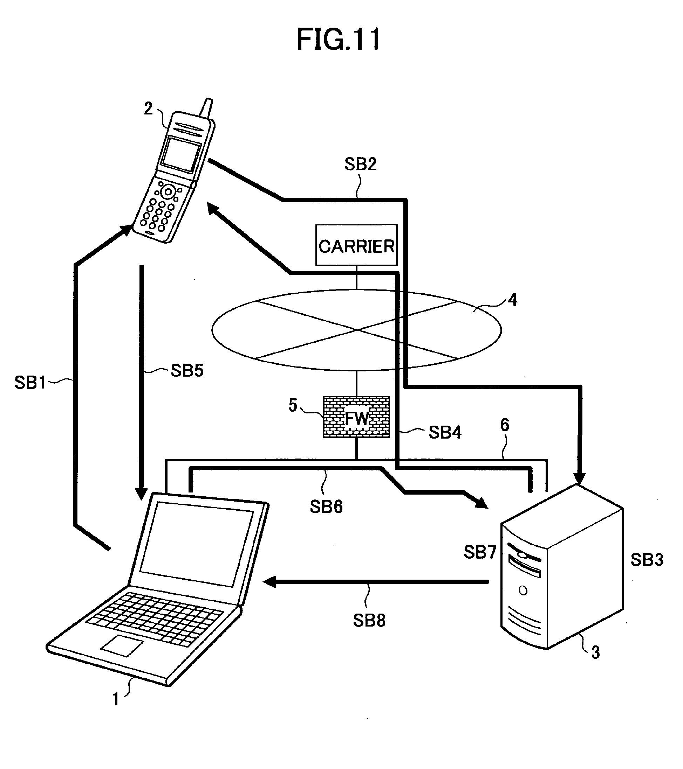

Referring now to FIG. 11, the authentication system according to the present embodiment is further described in detail. FIG. 11 illustrates an exemplary authentication system according to an embodiment.

The authentication system illustrated in FIG. 11 includes the following components: a user terminal 1 such as a notebook computer; a mobile mailing device 2 such as a cellular phone; and a one-time password generation server 3. Those components are different from those of the authentication system illustrated in FIG. 1 in that the user terminal 1 is located in a region protected by a firewall 5 and that the user terminal 1 is connected with the one-time password generation server 3 via a network 6. The network is preferably a secured one such as an intra-net. When the network is not a secured one, the communication between the user terminal 1 and the one-time password generation server is preferably encrypted.

The user powers on the user terminal 1.

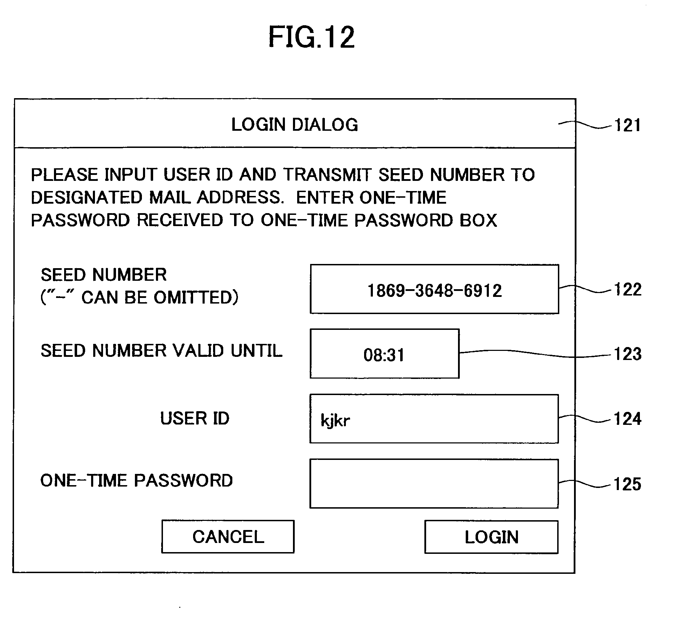

The user terminal 1 generates a seed number, which may be a 12-digit random number generated based on date and time-of-day, for example. The user terminal 1 displays a log-in screen 121 illustrated in FIG. 12. The log-in screen 121 includes the generated 12-digit seed number 122 and the time period 123 until which the seed number is valid. The user terminal 1 further displays boxes 124 and 125 for allowing the user to input a user ID and a one-time password, respectively.

The user inputs the user ID that has been assigned and notified when the user is registered by the one-time password generation server 3.

The user can manually input the seed number 122 indicated in the log-in screen 121 to the text of an e-mail to be transmitted by the mobile mailing device 2 (step SB1).

The mobile mailing device 2 transmits the e-mail including the seed number 122 as the text of the e-mail to a reception address registered in the mobile mailing device 2 (step SB2).

The transmitted e-mail is routed in the Internet 4 to arrive at the firewall 5 which may be established by an enterprise who has introduced the authentication system. The e-mail is usually not blocked by the firewall 5 and received by the one-time password generation server 3 provided in the network of the enterprise, for example.

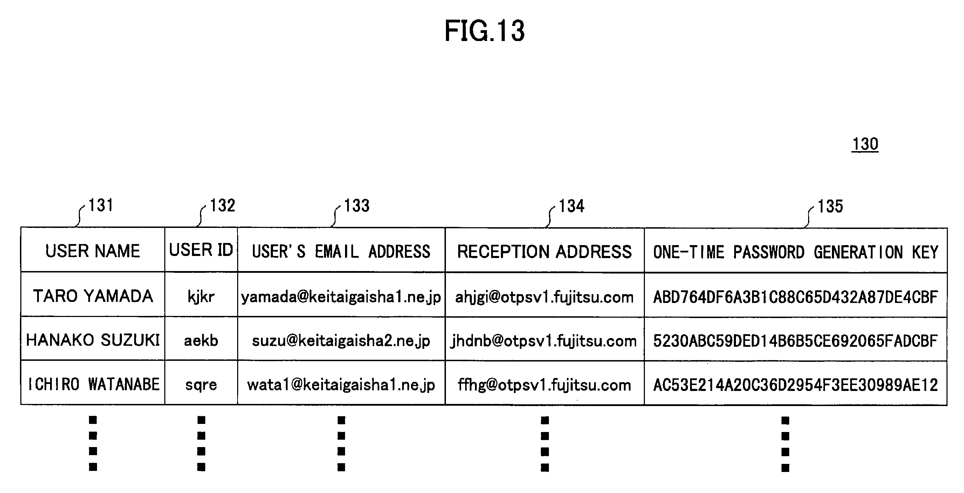

The one-time password generation server 3 includes a user information database 130. FIG. 13 illustrates an exemplary configuration of a user information database 130. The user information database 130 illustrated in FIG. 13 may be a table of a relational database, for example, and illustrated as including the following fields: user name 131; user ID 132; user's e-mail address 133; reception address 134; one-time password generation key 135.

The one-time password generation server 130 searches the user information database 130 for the sender address (indicated after "from") of the received e-mail, and retrieve a one-time password generation key 135 for the user. The one-time password generation server 3 computes (generates) a one-time password based on the retrieved one-time password generation key, the seed number included in the received e-mail as its text and the customer unique number stored in the one-time password generation server 3.

The one-time password generation server 3 transmits, to the mobile mailing device 2, an e-mail including the computed one-time password as the text of the e-mail.

The generated and transmitted e-mail passes through the firewall 5 and received by the mobile mailing device 2 via the Internet 4 (step SB4).

The user displays the received e-mail with the mobile mailing device 2 and reads the one-time password included as the text of the e-mail. The user manually inputs the one-time password to the one-time password box 125 in the log-in dialog 121 displayed on the user terminal 1.

The user terminal 1 determines whether it is connected with the one-time password generation server 3. The user terminal 1 may dispatch a "ping" to the one-time password generation server 3 for the determination.

If the user terminal determines that it is not connected with the one-time password generation server 3 via the network 6, the user terminal performs the authentication (stand-alone authentication) described with reference to FIG. 7.

If the user terminal 1 is connected to the one-time password generation server 3 via the network 6, the user terminal 1 may establish a connection with the one-time password generation server 3 using the Secure Socket Layer (SSL). After the connection being established, the user terminal 1 transmits the generated seed number 122, the inputted user ID 124, and the inputted one-time password 125 to the one-time password generation server 3 (step SB6).

The one-time password generation server 3 searches the user information database 130 to retrieve the one-time password generation key 135 which is unique for the user based on the received user ID. The one-time password generation server 3 generates a one-time password for authentication based on the one-time password generation key 135, the seed number 122, and a customer unique number.

The one-time password generation server 3 compares the generated one-time password and the received one-time password from the user terminal 1. If the generated and received one-time passwords match, the one-time password generation server 3 successfully authenticates the user. Otherwise, the one-time password generation server 3 fails to authenticate the user.

If the authentication is successful, the one-time password generation server 3 transmits the result of successful authentication and the one-time password generation key 135 of the authenticated user to the user terminal through the SSL encrypted communication, for example. If the authentication is unsuccessful, the one-time password generation server 3 transmits only the result of unsuccessful authentication (step SB8).

If the authentication is successful, the user terminal 1 allows the user to log-in and stores the received one-time password generation key 135, which is associated with the user ID 124.

An exemplary configuration of each component of the authentication system illustrated in FIG. 11 is described.

The one-time password generation server 3 illustrated in FIG. 11 is different from the one-time password generation server 20 illustrated in FIG. 3 in that server 3 in FIG. 11 can communicate with the user terminal 1 using the communication unit 23. The communication using the communication unit 23 allows the one-time password generation server 3 to provide a one-time password generation keys which is unique for the user.

The user information database is configured as described with reference to FIG. 13.

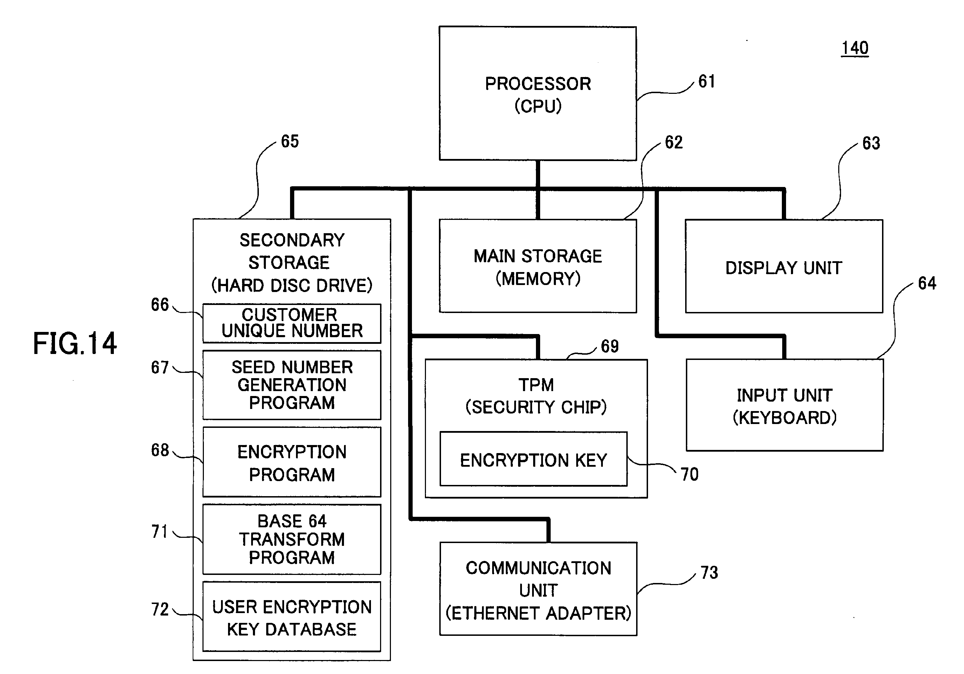

An exemplary configuration of the user terminal 3 is illustrated in FIG. 14. The user terminal 140 illustrated in FIG. 14 is similar to the user terminal 60 illustrated in FIG. 6 in that it includes a processor 61, a main storage unit 62, a display unit 63, an input unit 64, a secondary storage unit 65, and a TOM 69.

The secondary storage unit 65 stores a customer unique number 66, a seed number generation program 67, an encryption program 68, and a BASE 64 transform program 71.

The secondary storage unit 65 further stores a user encryption key database 72. The user encryption key database 72 is to store the one-time password generation key (FIG. 13; 135) received from the one-time password generation server 3 after encryption. The trusted platform module (TPM) 69 stores encryption keys 70 necessary for encryption of the user encryption key database 72, for example.

The user terminal 140 further includes a communication unit 73 for communication with the one-time password generation server 3 via the network. The communication unit may be a Ethernet (trademark) adapter, for example.

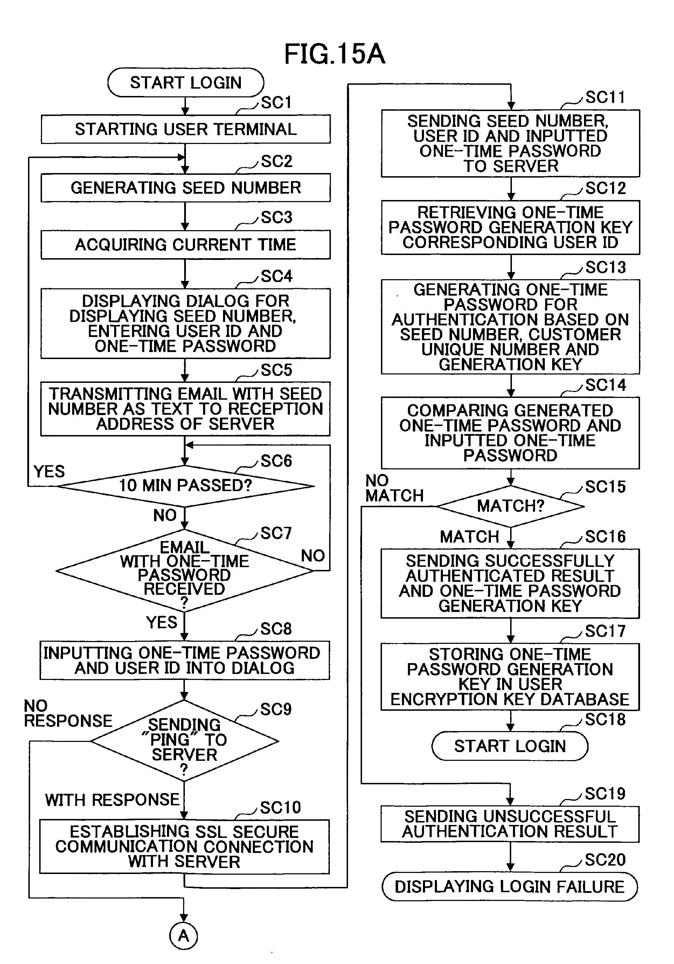

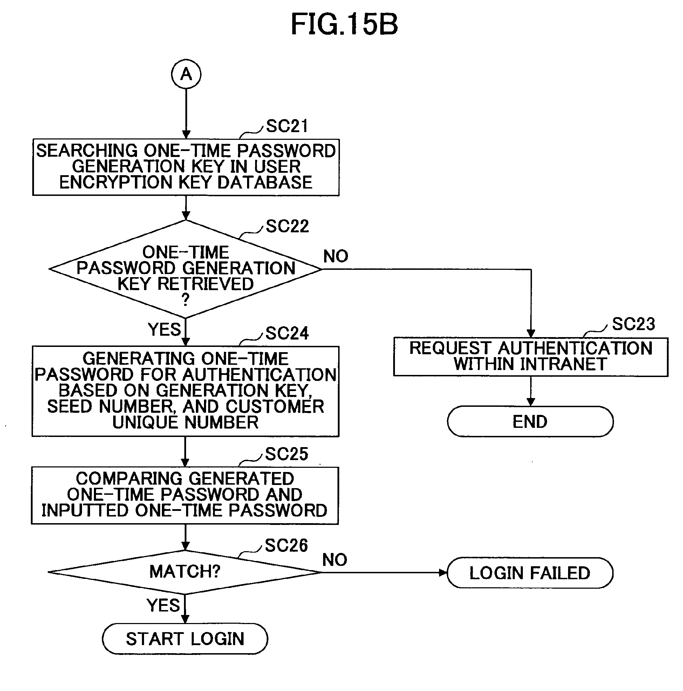

The log-in method to the user terminal according to the present embodiment is described. FIG. 15 is a flowchart illustrating a method of logging-in according to a second embodiment.

The user turns on (starts) the user terminal (step SC1). The user terminal loads the seed number generation program (FIG. 14; 67) from the secondary storage unit (FIG. 14; 65) to the processor (FIG. 14; 61) for execution.

The user terminal generates a seed number (step SC2). The seed number may be a 12-digit value, for example, which can be generated by means of a function for generating random number such as "rand" of the C language. The seed number is stored in the main storage unit such as a memory (FIG. 14; 62).

It should be noted that since the "rand" function of the C language, for example, only generates a pseudo random function in a fixed order based on a seed value defined by a "srand" function, for example, it is preferable that the seed value is determined with a twist. For example, the seed value may be determined by means of arithmetically combining multiple values changing time to time such as time of day, the remaining capacity of the secondary storage unit, the serial number of the secondary storage unit, and the number of CPU clock cycles after the power-on of the user terminal.

The user terminal may acquire the current time of day from an internal timer (not illustrated), for example (step SC3).

The user terminal displays the log-in screen illustrated in FIG. 12 based on the generated seed number, on the display unit (FIG. 14; 63).

The user who watches the log-in screen sends an e-mail including the seed number as its text to the reception address using the mobile mailing device (SC5).

On the other hand, the user terminal determines whether lapse time from the time of day acquired in steps SC3 has exceeded a predetermined time period (10 minutes, for example) (step SC6). If the lapse time has not exceeded the predetermined time period, the method proceeds to SC7. Otherwise, the method deletes the log-in screen to return to step SC2. The reason of resetting the log-in process subject to the predetermined time period is that setting the expiry time for the seed number may reduce the risk of log-in by an unauthorized user.

The user determines whether the user has received a returned e-mail including a one-time password from the one-time password generation server (step SC7). If the user has received the returned e-mail, the method proceeds to SC8. Otherwise, the process returns to step SC6. The one-time password may be generated by the one-time password generation server in a similar way as described with reference to FIG. 10.

The user inputs the received one-time password and his/her user ID to the log-in screen (FIG. 12) and presses a log-in button (step SC8).

The user terminal transmits "ping" to the one-time password generation server to determine whether the user terminal is connected with the one-time password generation server. If the server responds, the method proceeds to step SC11. Otherwise, the method proceeds to step SC21 (step SC9).

The user terminal establishes a connection with the one-time password generation server for encrypted communication (step SC10). The encrypted communication may use Secure Socket Layer (SSL), for example.

The user terminal sends the user ID and one-time password both received from the user as well as the seed number generated in step SC2 to the one-time password generation server through the connection (step SC11). The one-time password generation server uses the user ID to retrieve a one-time password generation key (FIG. 13; 35) assigned to the user from the user information database (FIG. 3; 26).

The one-time password generation server then generates a one-time password for authentication based on the received seed number (step SC11), the retrieved one-time password generation key (step SC12), and a customer unique number (FIG. 3; 25). An exemplary algorithm for generating one-time passwords has been described with reference to FIG. 10.

The one-time password generation server then compares the generated one-time password (step SC13) and the received one-time password from the user terminal (step SC11).

If the generated and received one-time passwords match, the one-time password generation server proceeds to step SC16.

The one-time password generation server transmits the result of successful authentication and the one-time password generation key retrieved from the user information database (FIG. 3; 26) (step SC12) to the user terminal through the connection established in step SC10.

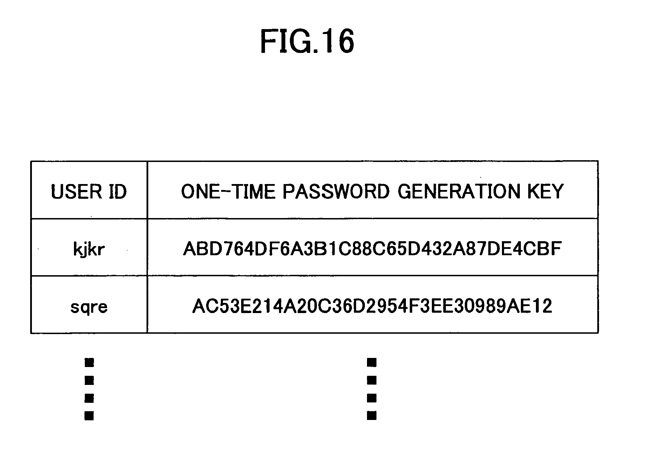

The user terminal receives the result of successful authentication and the one-time password generation key from the one-time password generation server. Then, the user terminal stores both the user ID and the received one-time password generation key, associated each other, in the user encryption key database (FIG. 14; 72) (step SC17). The user encryption key database will be described in more detail with reference to FIG. 16.

The user terminal starts log-in operation for the user (step SC18).

On the other hand, if the generated and received one-time passwords do not match, the method proceeds to step SC19.

The one-time password generation server transmits the result of unsuccessful authentication to the user terminal through the connection established in step SC10 (step SC19).

The user terminal displays that the log-in has failed (step SC20).

According to the above arrangements, the user terminal connected with the one-time password generation server via a network, the user terminal can safely receive the one-time password generation key which is unique for the user from the one-time password generation server.

As described above, in the absence of a response from the one-time password generation server to "ping" (step SC9), the method proceeds to step SC21.

The user terminal searches a one-time password generation key corresponding to the user ID in the user encryption key database (FIG.14; 72) (step SC21). If the user terminal fails to retrieve the one-time password generation key corresponding to the user, the method proceeds to step SC23.

The user terminal requests the user for authentication through a network (preferably, within intranet) (step SC23). Then, the method ends.

On the other hand, if the user terminal succeeds in retrieving the one-time password generation key corresponding to the user, the method proceeds to step SC24.

The user terminal generates a one-time password for authentication based on the retrieved one-time password generation key, the generated seed number, and the customer unique number (step SC24). An exemplary algorithm for generating one-time passwords has been described with reference to FIG. 10.

The user terminal compares the generated one-time password and the one-time password inputted in step SC8 (step SC26). If the generated and inputted one-time passwords match, the user terminal starts log-in operation. Otherwise, the user terminal terminates the log-in process as failure.

An exemplary configuration of the user encryption key database (FIG. 14; 72) is described in detail. FIG. 16 illustrates an exemplary configuration of a user encryption key database.

The user encryption key database may be a database in which the user ID and the one-time password generation key corresponding to the user ID are stored, associated with each other. The user encryption key database may be a partial duplication of the user information database (FIG. 3; 26) of the one-time password generation server.

The user terminal can determine whether the user is eligible to log-in using the user encryption key database in a stand-alone state in which the user terminal is not connected with the one-time password generation server via a network.

The issuance of a one-time password by the one-time password generation server is performed in a similar way as described with reference to FIG. 9.

The user encryption key database (FIG. 14; 72) of the user terminal initially stores no user encryption key. The user terminal can receive to store a user encryption key from the one-time password generation server by performing the authentication of the user via a network.

For example, a notebook computer may be used connected to a network while the user is working in his /her office and in stand-alone state while the user is out of the office. Now it is assumed that the user uses the notebook computer as described above. Even if the notebook computer initially does not have the one-time password generation key for the user in the user encryption key database, the notebook computer can receive the one-time password generation key for the user while the user is working in the office with the notebook computer connected to the one-time password generation server via the network.

In the second embodiment, it is assumed that only one-time is utilized for the log-in operation. It is appreciated by one with ordinary skill in the art that the second embodiment can be utilized in parallel with another authentication system. In particular, biometrics may be effectively utilized in parallel with the authentication system described above.

The embodiments described above may be summarized as follows.

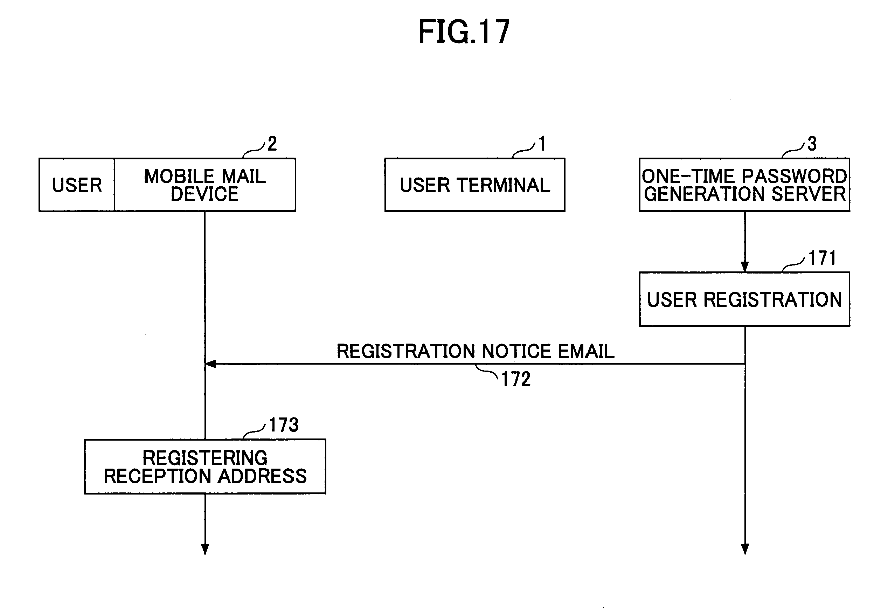

Fig. 17 is a sequence diagram illustrating user registration processing.

In FIG. 17, the mobile mailing device 2 corresponds to the mobile mailing device 2 illustrated in FIGs. 1 and 11, for example. The user terminal 1 corresponds to the user terminal 1 illustrated in FIGs. 1 and 11. The one-time password generation server 3 corresponds to the one-time password generation server 3 illustrated in FIGs. 1 and 11.

The one-time password generation server 3 registers the user (step 171) and generates a reception address. The above steps may correspond to steps SR1 - SR3 of FIG. 5.

The one-time password generation server 3 sends a registration notice e-mail including the generated reception address to the mobile mailing device (step 172). The above step may correspond to steps SR4 - SR5 of FIG. 5.

The mobile mailing device 2 stores the reception address included in the registration notice e-mail to an address book provided in the mobile mailing device 2. The above step may correspond to step SR6 of FIG. 5.

Then, the user registration process is completed.

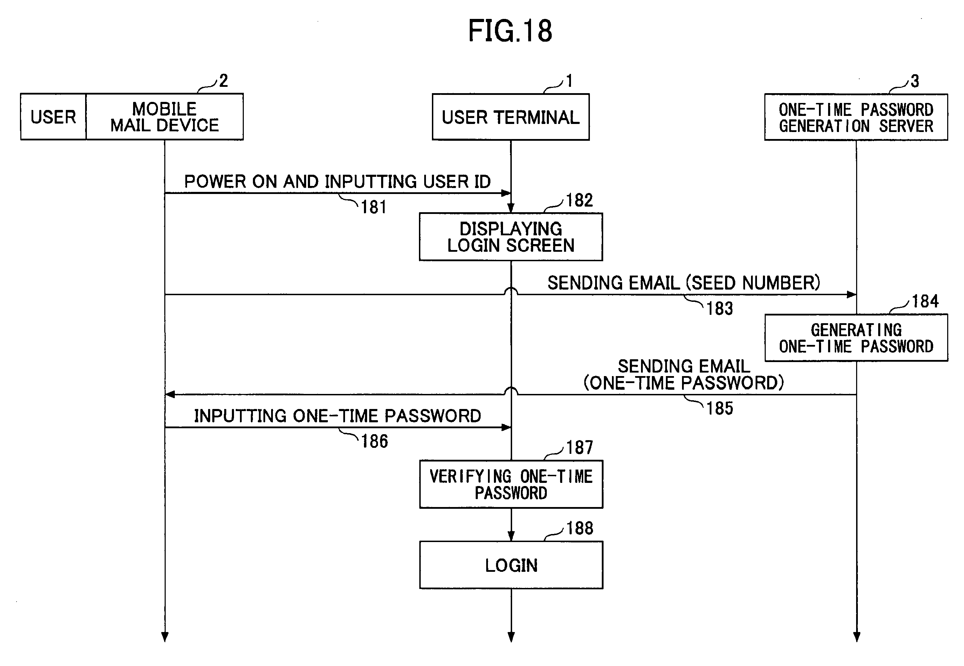

Fig. 18 is a sequence diagram illustrating log-in processing in stand-alone state.

The user turns on the user terminal 1 and inputs the user ID assigned to the user (step 181). The above step may correspond to step SA1 of FIG. 7. In FIG. 7, the input of the user ID is not illustrated.

Then, the user terminal 1 generates the seed number and displays the log-in screen including the generated seed number and a box for inputting a one-time password. The above step may correspond to steps SA2 - SA10 of FIG. 7.

The user reads the seed number included in the log-in screen and uses the mobile mailing device 2 to send an e-mail including the seed number to the one-time password generation server 3 (step 183).

The one-time password generation server 3 generates a one-time password based on at least the seed number included in the received e-mail (step 184). The above steps may correspond to steps SS1 - SS15 of FIG. 9.

The one-time password generation server 3 sends an e-mail including the generated one-time password to the mobile mailing device (step 185). The above steps may correspond to steps SS16 - SS17 of FIG. 9.

When the mobile mailing device 2 receives the e-mail, the user inputs the one-time password included in the e-mail to the box for inputting the one-time password in the log-in screen displayed on the user terminal 1 (step 186).

The user terminal 1 compares the inputted one-time password and the generated one-time password to determine whether the two one-time passwords match (step 187). The above steps may correspond to steps SA11 - SA14 of FIG. 7.

If the two one-time passwords match, the user terminal allows the user to log-in (step 188). The above step may correspond to step SA15 of FIG. 7.

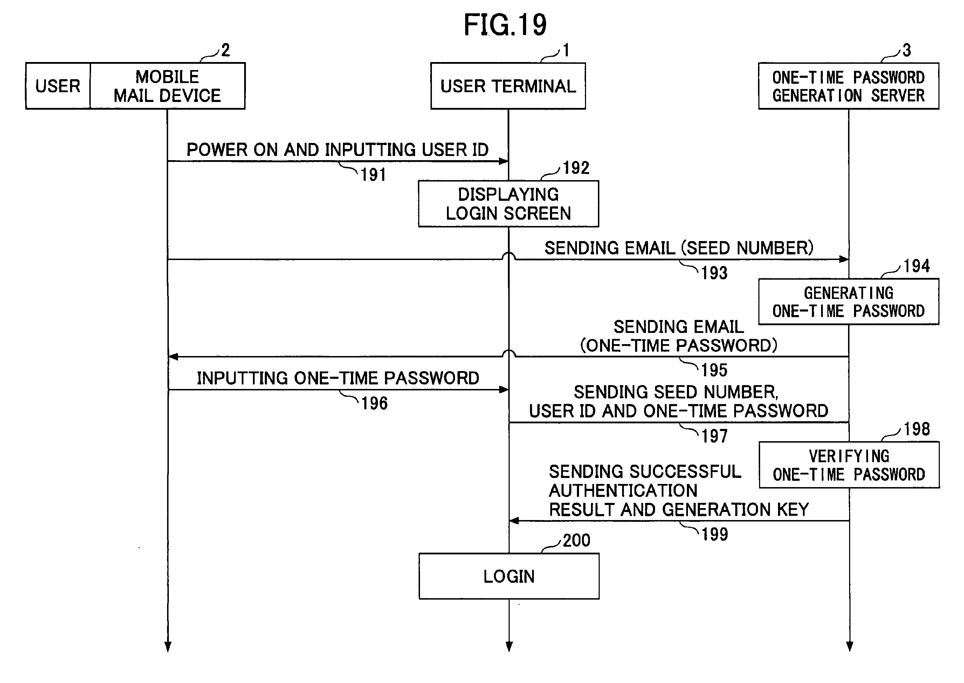

FIG. 19 is a sequence diagram illustrating the log-in process in the case where the user terminal 1 and the one-time password generation server 3 are connected via the network.

The user turns on the user terminal 1 and inputs the user ID assigned to the user (step 191). The above step may correspond to step SC1 of FIG. 15. In FIG. 15, the input of the user ID is not illustrated.

Then, the user terminal 1 generates the seed number and displays the log-in screen including the generated seed number and a box for inputting a one-time password (step 192). The above step may correspond to steps SC2 - SC4 of FIG. 15. The log-in screen may be one illustrated in FIG. 12, for example.

The user reads the seed number included in the log-in screen and uses the mobile mailing device 2 to send an e-mail including the seed number to the one-time password generation server 3 (step 193).

The one-time password generation server 3 generates a one-time password based on at least the seed number included in the received e-mail (step 194). The above steps may correspond to steps SS1 - SS15 of FIG. 9.

The one-time password generation server 3 sends an e-mail including the generated one-time password to the mobile mailing device (step 195). The above steps may correspond to steps SS16 - SS17 of FIG. 9.

When the mobile mailing device 2 receives the e-mail, the user inputs the one-time password included in the e-mail to the box for inputting the one-time password in the log-in screen displayed on the user terminal 1 (step 196).

The steps up to here are similar to steps 181-186 of FIG. 18.

The user terminal 1 determines whether it is connected to the one-time password generation server 3 via the network, and if connected, transmits the seed number, the user ID, and the one-time password (inputted in step 196) to the one-time password generation server 3 (step 197).

The one-time password generation server 3 compares the received one-time password from the user terminal 1 and the one-time password generated by the server (and sent to the mobile mailing device 2) to determine whether the two one-time passwords match (step 198). The above step may correspond to steps SC1 - SC15 of FIG. 15.

If the two one-time passwords match, the one-time password generation server 3 sends information indicating the successful authentication and the one-time password generation key to the user terminal 1 (step 199).

The user terminal 1 allows the user to log-in in response to the information indicating the successful authentication (step 200), and stores the one-time password generation key received from the one-time password generation server in the user encryption database (FIG. 14; 72). The above steps may correspond to steps SC17 - SC18 of FIG. 15.

Embodiments have been described in detail with reference to the accompanied drawings. The present invention, however, is not limited by those embodiments. It would be appreciated that modifications and alterations can be made to those embodiments within the spirit and scope of claimed inventions.

## Claims

1. An authentication system, comprising:
a user terminal to perform authentication based on a password corresponding to a seed number generated in accordance with a predefined rule; and
a password issuance apparatus to issue the password in response to reception of a request message including the seed number.

2. The authentication system as claimed in claim 1, further comprising a transmission device to transmit the request message to the password issuance apparatus.

3. The authentication system as claimed in claim 1, wherein, when the user terminal is connected with the password issuance apparatus via a network, the user terminal transmits the password inputted thereto and the seed number to the password issuance apparatus; and
the password issuance apparatus performs the authentication based on the password and the seed number and transmits secret information in accordance with a result of the authentication.

4. The authentication system as claimed in claim 1, wherein the password issuance apparatus stores different reception address for each transmission device and issues the password when the request message transmitted by the transmission device is addressed to a reception address corresponding to the transmission device.

5. The authentication system as claimed in claim 2, wherein the password issuance apparatus issues the password in response to the request message from the transmission device subject that an enable flag and/or an issuance counter corresponding to the transmission device satisfy respective predetermined conditions.

6. The authentication system as claimed in claim 1, wherein the seed number is a pseudo random number generated based on at least one of current time of day, remaining capacity of a secondary storage unit, a serial number of the secondary storage unit, number of clock cycles since the user terminal has been turned on.

7. A user terminal, comprising:
a processing unit to generate a seed number in accordance with a predefined rule and generate a first password corresponding to the seed number;
a display unit to display the seed number generated by the processing unit; and
an input unit to allow a second password to be inputted;
wherein the processing unit performs authentication by determining whether the first and second passwords match.

8. The user terminal as claimed in claim 7, further comprising a communication unit to communicate with a password issuance apparatus via a network,
wherein, when the user terminal can communicate with the password issuance apparatus, the user terminal transmits the second password inputted to the input unit and the seed number generated by the processing unit to the password issuance apparatus, and receives secret information subject to a successful authentication performed by the password issuance apparatus.

9. A password issuance apparatus, comprising:
a communication unit to receive a request message including a seed number generated by a user terminal in accordance with a predefined rule; and
a processing unit to issue a password for authentication by the user terminal based on at least the seed number.

10. The password issuance apparatus as claimed in claim 9, wherein when the password issuance apparatus can communicate with the user terminal via the network, the password issuance apparatus receives the inputted password and seed number from the user terminal; and
the processing unit performs authentication based on the received password and seed number and transmits secret information subject to a successful authentication.

11. The password issuance apparatus as claimed in claim 9, further comprising a user information database to register a transmission apparatus,
wherein when a particular transmission apparatus is registered in the user information database, the processing unit issues a password in response to a request message from the particular transmission apparatus.

12. The password issuance apparatus as claimed in claim 11, wherein the user information database registers different reception address for each transmission device; and when the request message transmitted by the transmission device is addressed to a reception address corresponding to the transmission device, the processing unit issues the password.

13. The password issuance apparatus as claimed in claim 11, wherein the user information database registers an enable flag and/or an issuance counter for each transmission device, and
the processing unit issues the password in response to the request message from the transmission device subject that an enable flag and/or an issuance counter corresponding to the transmission device satisfy respective predetermined conditions.

14. A method for authentication, the method comprising:
generating a seed number in accordance with a predefined rule;
issuing a password in response to reception of a request message including the seed number; and
performing authentication based on the issued password.

15. The method as claimed in claim 14, further comprising:
when a user terminal is connected to a password issuance apparatus via a network, transmitting the inputted password and the seed number to the password issuance apparatus; and
performing the authentication based on the password and the seed number and transmitting secret information in accordance with a result of the authentication.
